# EUROPEAN PATENT SPECIFICATION

(11) **EP 3 489 592 B1**
(45) Date of publication and mention of the grant of the patent: **08.04.2026**
(21) Application number: 17203769.9
(22) Date of filing: 27.11.2017
(51) Int. Cl.: F24F 12/00, F24F 11/39

(54) **FILTER CONTAMINATION DETECTION METHOD**
FILTERKONTAMINATIONDETEKTIONSVERFAHREN
PROCÉDÉ DE DÉTECTION DE CONTAMINATION DE FILTRE

(43) Date of publication of application: 29.05.2019
(73) Proprietor: Daikin Europe N.V., 8400 Oostende (BE); DAIKIN INDUSTRIES, LTD., Osaka-Shi, Osaka 530-0001 (JP)
(72) Inventor: Vanooteghem, Jan, 8400 Oostende (BE); Lavens, Jolien, 8400 Oostende (BE)
(74) Representative: Hoffmann Eitle

(56) References cited:
- CA-A1- 2 937 558
- CN-A- 105 004 013
- CN-A- 105 258 288
- CN-A- 106 369 749
- KR-A- 20100 078 196
- US-A- 6 066 194
- US-A1- 2016 016 104
- US-B1- 9 702 577

## Description

### TECHNICAL FIELD

The present invention relates to a filter contamination detection system particularly for a ventilation system and/or an air conditioner and a method for determining a filter contamination state particularly for a ventilation system and/or an air conditioner, preferably using said filter contamination detection system.

### BACKGROUND

In recent years, heat recovery devices have been developed, in order to reduce temperature and energy loss when exchanging used indoor air with fresh outdoor air. Such heat recovery devices usually comprise an air-supply path and an air-exhaust path, wherein on the air-supply path, fresh outdoor air drawn in via an outside air-inlet by an air-supply fan passes through an air-supply passage of a heat exchanger and is supplied to a room from an inside air-outlet. On the other hand, on the air-exhaust path, indoor air drawn out of the room via an inside air-inlet by an air-exhaust fan passes through an air-exhaust passage of the heat exchanger, and is exhausted from an outside air-outlet. Hence, the warm or cold indoor air can perform a heat transfer with the colder or warmer outdoor air via the heat exchanger and thereby (pre)heat or (pre)cool the fresh outdoor air.

However, as in general the heat exchanger is formed by a plate or fin type heat exchanger, foreign objects (e.g. insects, leaves, hairs, etc.) and/or particulate matter (e.g. pollen, sand, etc.) entrained by the air (fresh outdoor air and indoor air) can stick to the heat exchanger. Contamination of the heat exchanger leads to a drop of efficiency and an increased pressure drop over the heat exchanger, in other words, an increased pressure drop when the air passes through the heat exchanger. Moreover, cleaning of the heat exchanger is difficult, particularly in case of a plate heat exchanger. Additionally, some types of heat exchangers, in particular heat exchangers made out of paper, may not be cleaned with water/detergent, making it impossible to fully remove dust between the plates.

Hence, in order to prevent the heat exchanger of getting contaminated, air-filters are placed in front of the heat exchanger inside the air-supply path and the air-exhaust path. However, said air-filters are clogged after prolonged use, this increases the pressure drop over the filter, which increases air-flow resistance in the air-supply passage and the air-exhaust. Thus, if the same fan speed is used, there is reduction in the volume of air to be supplied and exhausted. On the other hand, in case fan speed is adjusted to compensate the pressure drop, the power consumption and noise of the unit will increase. Similar problems apply to filters of ventilation systems and air conditioners. Accordingly, in order to avoid these problems, the air-filters need to be cleaned and/or replaced frequently.

Filters can also be used to improve the air quality of fresh air coming in and used air coming out. This can be done with medium and/or fine filters and/or special types of filters like Microfilters, HEPA filters and/or ULPA filters.

In order to determine when to clean or replace the filters, certain solutions are known. It can be monitored by the use of logbooks by the installer. Then it is known when the last cleaning and/or replacement of filters was done. Or it can be based on fixed time intervals (for example each 6 months). In this case the air conditioner for example is counting the time passed since the last cleaning or replacement. However, as the actual contamination of the filter depends on the conditions at the installation site (for example the amount of dust) and the actual operating hours of the air conditioner, cleaning or replacing is carried out too soon or too late when using fixed time intervals.

A further known solution is to provide a cleaning or replacement notification based on operating hours of the air conditioner. In this case the air conditioner is only counting the hours when the fan(s) are on. As above, the contamination of the filter depends on the conditions at the installation site. For example, the filter of an air conditioner used in a city already needs to be cleaned, because outside air is dirty, whereas the filter of an air conditioner used at the country side, where air is much cleaner, can be used much longer, even though the operating hours are the same.

Moreover, it is a known method for monitoring the status of the air-filters to use a pressure sensor, in particular a differential pressure sensor, which measures a pressure difference of the air before and after the filter(s). If the pressure difference increases a certain threshold, the system concludes that the filter needs to be cleaned. In this case an additional sensor and additional tubing needs to be installed in the air conditioner which leads to a cost increase. Also, it is not reliable to measure the pressure at 1 position in the unit, because the air distribution is different at each location.

Hence, there is a need for a filter contamination detection system and a method for determining a filter contamination state particularly for a ventilation system and/or an air conditioner which allow for precise determination of a filter contamination state in a simple, cost effective and reliable manner.

Other related art may be found in CN 105 258 288 A being directed to a detection method and a device for detecting filth blockage of a filter of an air conditioner, US 9 702 577 B1 describing a dynamic determination of fan speeds, CA 2 937 558 A1 describing an electrical device with filter mesh blockage detection function and CN 105 004 013 A being directed to an air-conditioning indoor unit filter screen filth blockage detection method and air-conditioning system control method.

### SUMMARY

In view of above, one object of the present disclosure is to provide a filter contamination detection system particularly for a ventilation system and/or an air conditioner and a method for determining a filter contamination state particularly for a ventilation system and/or an air conditioner, using preferably said filter contamination detection system, capable of accurately determining a filter contamination state of an air-filter particularly of a ventilation system and/or an air conditioner in an easy and reliable manner, particularly without the need of providing a differential pressure sensor and a differential pressure switch, thereby reducing cost.

These goals are achieved by a filter contamination detection system particularly for a ventilation system and/or an air conditioner with the technical features of claim 1 and a method for determining a filter contamination state particularly for a ventilation system and/or an air conditioner with the technical features of claims 6 and 8. Preferred embodiments of the present disclosure follow from the dependent claims.

The present disclosure provides a filter contamination detection system particularly for a ventilation system and/or air conditioner according to claim 1.

In this way it becomes possible to determine a filter contamination state of the first air-filter in an easy and reliable manner, particularly without the need of providing further elements, like pressure sensor, pressure switch, measuring tubes and wiring. Thereby, it becomes possible to reduce the complexity of the filter contamination detection system. Moreover, as it is not necessary to install a pressure sensor and measuring tubes there is no risk of contamination or clogging of the same. Additionally, in case of measuring the fan motor power, the fan motor current or the fan motor resistance it becomes possible to use said measurements also for other controls, like automatic air flow selection after installation. Furthermore, as the determination of the filter contamination state is based on parameters that are directly influenced by the clogging of the filter, an accurate state of the filter can be determined. For the same reason, the filter contamination state of the filter is known at each moment, hence, it becomes possible to predict when the filter needs to be cleaned or replaced based on a determined trend. Moreover, the sequence of fan and filter can be changed.

The filter contamination detection system may comprise: a second air-filter, a second fan for inducing a second airflow through a second air passage comprising an air inlet and an air outlet through the second air-filter, and the filter contamination detection system may further comprise a second fan motor that drives the second fan, wherein the controller may be configured to determine the filter contamination states of the first air-filter and the second air-filter independently from each other. Moreover, the sequence of the second fan and the second air-filter can be changed.

This provides the possibility to know if the contamination states of the filters differ from each other. Said configuration is particularly advantageous when it is expected that the two different airflows have different degrees of contamination. Hence, it becomes possible to avoid cleaning or replacement of one of the filters, which level of clogging did not yet reach a certain degree that requires cleaning or replacement.

Furthermore, a heat exchanger may be configured to perform a heat transfer between the first air passage and the second air passage, the first air passage may be an air-supply passage that supplies outside air to a room and the second air passage may be an air-exhaust passage that exhausts inside air to an outside.

In this way it becomes possible to provide a heat recovery system. As usually the temperature of the inside air is higher than the temperature of the outside air during a heating period or lower than the temperature of the outside air during a cooling period, part of the heat of the inside air can be transferred via the heat exchanger to the supplied outside air, thereby (pre)heating/(pre)cooling the outside air.

The filter contamination detection system comprises at least one temperature sensor configured to measure a temperature of the first and/or second fan motor or of the induced airflow, wherein the controller is configured to correct the fan motor power measurement(s) and/or the fan motor current measurement(s) and/or the fan motor resistance measurement(s) and/or the DC voltage measurement(s) for a temperature influence on the basis of the measured/calculated temperature(s).

Thereby, it becomes possible to correct or compensate an influence of the temperature of the relevant fan motor on the corresponding measurement. In detail, the resistance of the fan motor changes with the temperature, so the power input and the current of the fan motor also change. Hence, in the controller a reference temperature or standard temperature with corresponding fan motor power, fan motor current, fan motor resistance and/or DC voltage is stored. If the measured temperature is higher than the reference temperature or standard temperature, then the power input or current of the fan motor will be lower and the motor resistance will be higher. On the other hand, if the measured temperature is lower than the reference temperature or standard temperature, then the power input or current of the motor will be higher and the resistance will be lower. Hence, when a temperature differing from the reference temperature or standard temperature is determined by the temperature sensor, the measured fan motor power and/or fan motor current and/or fan motor resistance and/or DC voltage can be recalculated to standard temperature condition and an influence of the fan motor temperature can be compensated. Thus, it is possible to improve the accuracy of the filter contamination detection system.

Additionally, the filter contamination detection system may comprise at least one airflow determination device for determining an airflow of the first and/or second air passage.

The filter contamination detection system may comprise at least one additional first fan located in the first airflow and/or at least one additional second fan located in the second airflow, and/or at least one additional first air-filter located in the first airflow and/or at least one additional second air-filter located in the second airflow, wherein the at least one additional first fan is driven by the first fan motor or by an additional first fan motor and/or the at least one additional second fan is driven by the second fan motor or by a second fan motor.

Thereby, it becomes on the one hand possible to install different types of filters in one airflow or air passage, for example one Microfilter and one HEPA (High Efficiency Particulate Air) filter or ULPA (Ultra Low Penetration Air) filter to improve the fresh air quality, on the other hand it becomes possible to install more fans in one airflow or air passage. This makes it for example possible to install different types of fans in one airflow or air passage or to reduce the size of each fan while maintaining the same throughput.

The filter contamination detection system further comprises a housing accommodating the first fan and the first air passage, wherein the first filter is also accommodated in the housing. Moreover, the housing may also accommodate the second fan, the second air passage and/or the second filter.

The present invention further provides a method for determining a filter contamination state particularly for a ventilation system and/or an air conditioner according to claims 6 and 8.

In the method for determining a filter contamination state according to claim 6, the step of determining a filter contamination state may comprise determining the filter contamination state of the first air-filter by comparing the detected fan motor power and/or the detected fan motor current and/or the detected fan motor resistance and/or the detected fan motor revolution speed and/or the detected DC voltage to a data set of power input and/or current and/or resistance and/or revolution speed and/or DC voltage as a function of pressure, wherein the data set of the device is at a certain filter contamination state and a certain temperature.

In the method for determining a filter contamination state according to claim 8, the step of determining a filter contamination state may comprise: determining the filter contamination state of the first air-filter by comparing the detected airflow rate to a data set of airflow as a function of revolution speed or DC voltage, wherein the characteristic graphs are preferably measured at a certain filter contamination state and a certain temperature.

The above methods for determining a filter contamination state may further comprise the steps:
- operating a second or more fan motor(s), particularly in a similar manner as the first fan motor,
- determining a filter contamination state of a second or more air-filter(s), particularly in a similar manner as in case of the first air-filter,
- wherein, the filter contamination states of the first air-filter and the second air-filter are determined independently from each other.

In the above methods for determining a filter contamination state, a correction of the fan motor power measurement(s) and/or the fan motor current measurement(s) and/or the fan motor resistance measurement(s) for a temperature influence may be performed on the basis of a measured or calculated temperature(s) of the first and/or second or more fan motor and/or the induced airflow(s).

Thereby, it becomes possible to correct or compensate an influence of the temperature of the relevant fan motor on the corresponding measurement(s), as already described above in detail. Thus, it is possible to improve the accuracy of the filter contamination detection system.

In the above methods for determining a filter contamination state, by comparing the determined filter contamination state of the first air-filter and/or the second or more air-filter(s) with a predetermined filter contamination threshold value, which does not need to be the same for all filters, it may be determined whether or not a cleaning of the first air-filter and/or the second or more air-filter(s) is necessary and accordingly the filter cleaning status information may be generated.

This enables to set a certain threshold value at which point a cleaning or replacement of the air-filter should be performed. It is also possible to provide a user with the possibility to adjust the threshold value according to experience.

In the above methods for determining a filter contamination state, the generated filter cleaning status information may be forwarded to a user or a handling system.

The generated filter cleaning status information may be transmitted via wireless or wired communication, in particular via Infrared, Wi-Fi and/or Bluetooth and/or mobile data.

In the present disclosure the term "handling system" describes for example a controller, in particular a controller of the ventilation system and/or air conditioner, a computer, a BMS, a bus etc. The handling system may be any kind of system that can receive the generated filter cleaning status information and further process it. For example in case of a controller, the controller can display the current contamination state of the filter(s) and give a warning signal when a certain threshold value is reached.

Furthermore, in case of a computer, the computer may receive generated filter cleaning status information from several, in particular independent, filter contamination detection systems and further process the received information. This enables that the computer for example automatically orders resupply of filters or a cleaning service for cleaning the respective filters.

In the above methods for determining a filter contamination state, the generated filter cleaning status information may trigger a self-cleaning process of the first air-filter and/or the second or more air-filter(s) and/or may contact a cleaning service.

In this way it becomes possible to increase the service life of the respective filter(s) and to ensure a sufficient filtration performance.

In the above methods for determining a filter contamination state, the step of determining the filter contamination state of the first air-filter and/or the second air-filter may be performed either at certain time intervals and/or when starting the air conditioner and/or ventilation unit and/or when changing program parameters and/or continuously and/or based on a input signal.

In the above methods for determining a filter contamination state, based on the determined filter contamination state(s) of the first and/or second or more air-filter(s) an approximate indication when the filter will have to be cleaned may be provided to a user or an approximate indication of the amount of filter contamination may be provided to a user.

This enables the user to prepare for the upcoming cleaning or replacement work of the filter(s). Hence, if necessary, the user can resupply required filter(s) for the upcoming replacement or schedule a cleaning operation.

In the above methods for determining a filter contamination state, the independent determination of the filter contamination states of the first and second or more air-filter(s) may be performed based on different predetermined data fields.

In this way it becomes possible to reflect different types of filters or contamination levels of air with different data fields. For example, in case the first air passage is an air-supply passage that supplies outside air to a room and the second air passage is an air-exhaust passage that exhausts inside air to an outside, it can be expected that the filter used for cleaning or filtering the outside air will become faster dirty than the filter used for cleaning or filtering the inside air that is discharged to the outside.

In the above methods for determining a filter contamination state, a correction of the motor power measurement(s) and/or the fan motor current measurement(s) and/or the fan motor resistance measurement(s) for a humidity influence may be performed on the basis of a measured/calculated humidity(s) in the first and/or second or more air passage(s).

As with the temperature, measuring the humidity also provides the possibility to correct or compensate an influence of the humidity of the air on the corresponding measurement. Thus, it is possible to improve the accuracy of the filter contamination detection system.

Use of the above filter contamination detection system for determining a filter contamination state of a first air-filter and/or a second or more air-filter(s) of a ventilation system and/or an air conditioner, comprising the steps:
- operating a first fan motor and/or a second or more fan motor(s) at a constant revolution speed or a constant DC voltage for driving a first fan,
- performing a detection process of a fan motor power(s) and/or a fan motor current(s) and/or a fan motor resistance(s),
- determining a filter contamination state of a first air-filter and/or a second or more air-filter(s) based on the detected fan motor power(s) and/or a fan motor current(s) and/or a fan motor resistance(s), particularly by using one of the above method for determining a filter contamination state, and
- generating a filter cleaning status information.

The use of the filter contamination detection system of the present disclosure is using the filter contamination detection system of the present disclosure. Therefore, the further features disclosed in connection with the above description of the filter contamination detection system may also be applied to the methods of the present disclosure. The same applies to the use of the filter contamination detection system.

### BRIEF DESCRIPTION OF THE DRAWINGS

Hereinafter, non-limiting examples of the present disclosure are explained with reference to the drawings, in which:
Fig. 1 shows a schematic view of an installed ventilation unit according to an embodiment of the present disclosure;
Fig. 2 shows a schematic view of a part of the filter contamination detection system of Fig. 1, in particular of a heat recovery system;
Fig. 3 shows a graph with several curves for a constant revolution speed of a fan motor or a constant DC voltage for driving said fan motor having external static pressure as a function of air flow rate;
Fig. 4 shows a graph with several curves for a constant revolution speed of a fan motor or a constant DC voltage for driving said fan motor having power input as a function of air flow rate;
Fig. 5 shows two diagrams illustrating the trend of relevant parameters over time of a first example not being part of the invention.
Fig. 6 shows two diagrams illustrating the trend of relevant parameters over time of a second example not being part of the invention.
Fig. 7 shows two diagrams illustrating the trend of relevant parameters over time of embodiment 3,
Figs. 8 and 9 show diagrams which illustrate the recalculation of the determined threshold value with a new starting point,
Fig. 10 shows a graph with several curves for a constant air flow rate having power input as a function of revolution speed or DC voltage, and
Fig. 11 shows a graph with several curves for a constant air flow rate having ESP (external static pressure) as function of revolution speed or DC voltage.

### DESCRIPTION OF EMBODIMENTS

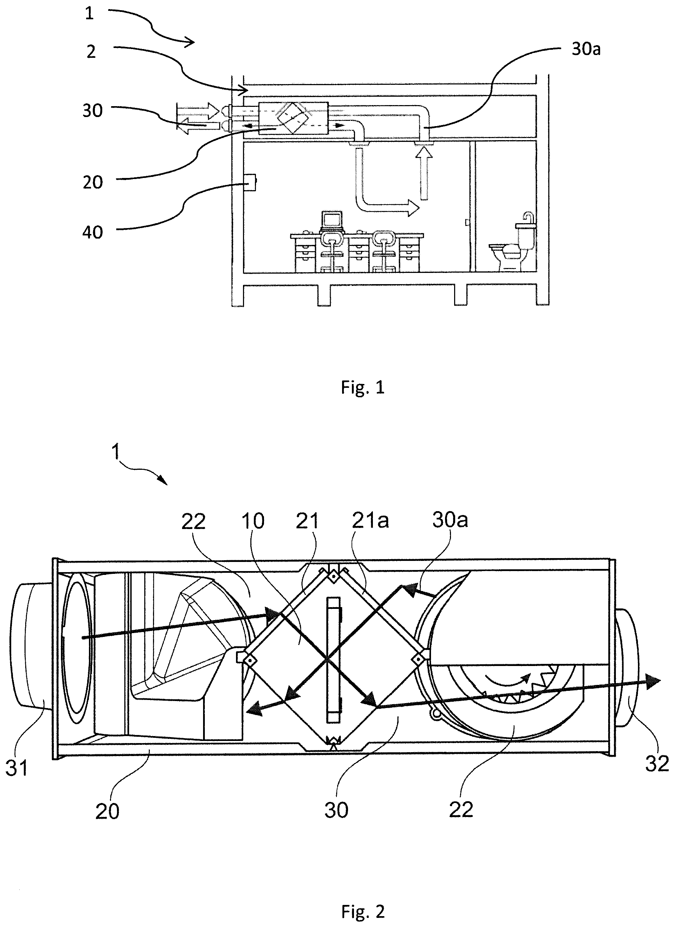

Fig. 1 shows a schematic view of an installed ventilation unit according to a currently preferred embodiment of the present disclosure.

The filter contamination detection system 1 according to the preferred embodiment is installed into a ventilation system 2, in particular into a heat recovery system, of an office building for exchanging used inside air of a room with fresh outside air. The filter contamination detection system 1 comprises a housing 20 accommodating a first air-filter 21 and a first fan 22 (shown in Fig. 2) and a first fan motor (not shown), which can be installed inside the housing 20 or outside of it. Moreover, as shown in Fig. 1, the filter contamination detection system 1 comprises a controller 40 configured to determine a filter contamination state of the first air-filter 21. The controller 40 may also be installed in/on the housing 20.

Fig. 2 shows a schematic view of a part of the filter contamination detection system 1 of Fig. 1, in particular of a heat recovery system that is installed into the ventilation system 2 of Fig. 1 for recovering heat of the used inside air in order to (pre)heat/(pre)cool the supplied outside air. As shown in Fig. 2, the first fan 22 driven by the first fan motor is used for inducing a first airflow through a first airflow passage 30, comprising an air inlet 31 and an air outlet 32. Furthermore, inside the housing 20 is provided a second fan 22a driven by a second fan motor for inducing a second airflow through a second airflow passage 30a, comprising an air inlet and an air outlet. The two airflow passages 30, 30a or the two airflows share one common heat exchanger 10, which is provided inside both airflow passages 30, 30a and allows a heat transfer between the two airflows. Thereby, it becomes possible to use the heat of the used inside air, which is exhausted to the outside, for (pre)heating/pre)cooling the supplied outside air.

Moreover, in both airflow passages 30, 30a an air-filter 21, 21a is provided. Each of the air-filters 21, 21a is provided before the heat exchanger 10, seen in the flow direction of the respective airflow. Hence, it is possible to avoid contamination of the heat exchanger 10 with foreign particle. Putting the air filter in front of the heat exchanger is an example, it can also be put behind the heat exchanger. Also optional filters can be put inside. This way, there can be filters in front of and behind the heat exchanger. The filter can also be placed at the inlet of the unit, instead of close to the heat exchanger.

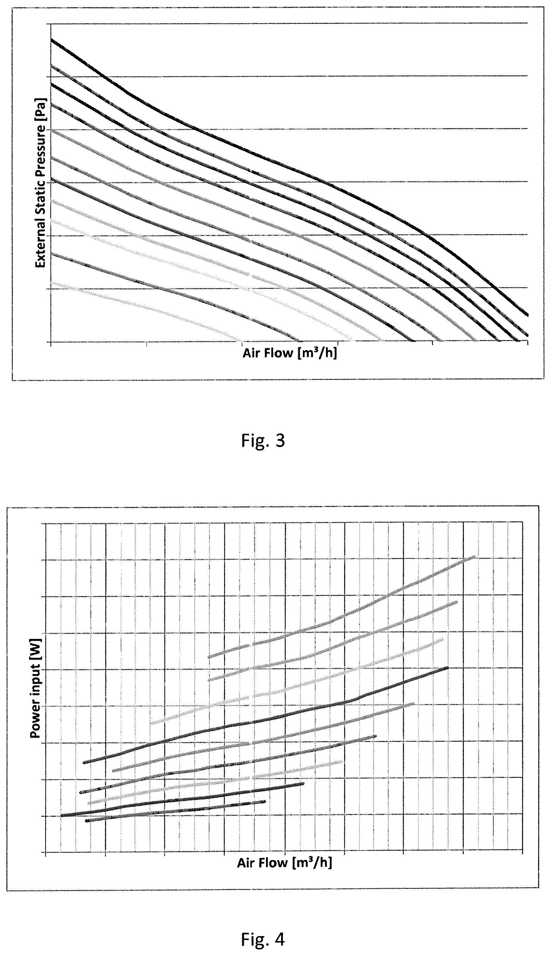

Fig. 3 shows a graph of a fan motor integrated in a unit or of a complete unit (which only has one fan) with several curves for a constant revolution speed of a fan motor or a constant DC voltage for driving said fan motor having external static pressure as a function of air flow rate. These curves are determined at a certain temperature (reference or standard temperature) and with a certain degree of filter contamination. This can be with clean filters, or with partially contaminated filters.

Fig. 4 shows a graph of a fan motor integrated in a unit or of a complete unit (which only has one fan) with several curves for a constant revolution speed of a fan motor or a constant DC voltage for driving said fan motor having power input as a function of air flow rate. These curves are determined at a certain temperature (reference or standard temperature) and with a certain degree of filter contamination. This can be with clean filters, or with partially contaminated filters.

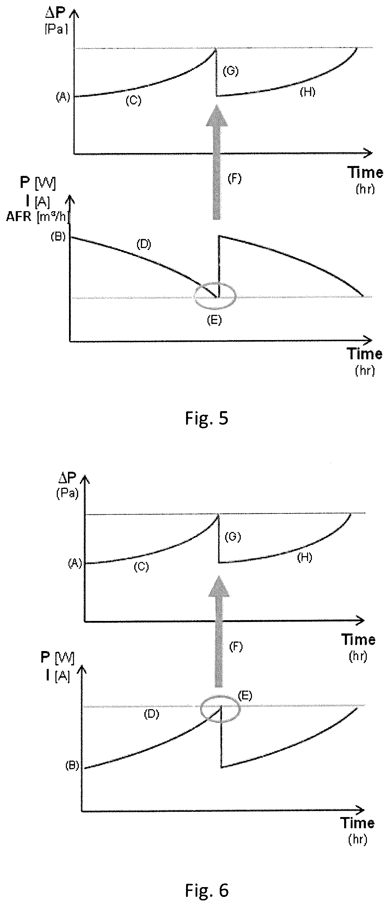

Fig. 5 shows two diagrams illustrating the trend of relevant parameters over time of a first example not being part of the invention. The upper diagram illustrates the trend of the pressure drop over the filter over time. The lower diagram illustrates the trend of the power input/current/air flow rate over time. The diagram points A to H correspond to the steps a) to h) of embodiment 1 which will be described in detail below in connection with embodiment 1.

Fig. 6 shows two diagrams illustrating the trend of relevant parameters over time of a second example not being part of the invention. The upper diagram illustrates the trend of the pressure drop over the filter over time. The lower diagram illustrates the trend of the power input/current over time. The diagram points A to H correspond to the steps a) to h) of embodiment 2 which will be described in detail below in connection with embodiment 2.

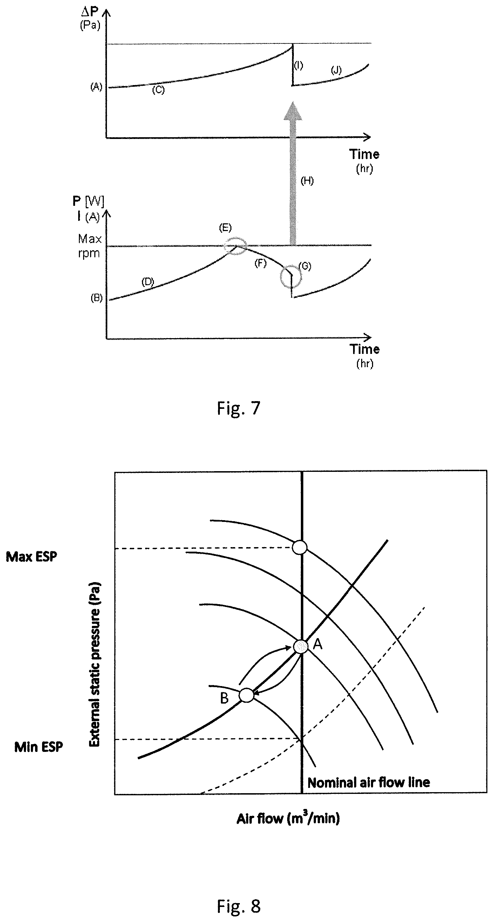

Fig. 7 shows two diagrams illustrating the trend of relevant parameters over time of embodiment 3. The upper diagram illustrates the trend of the pressure drop over the filter over time. The lower diagram illustrates the trend of the power input/current/air flow rate over time. The diagram points A to H correspond to the steps a) to h) of embodiment 3 which will be described in detail below.

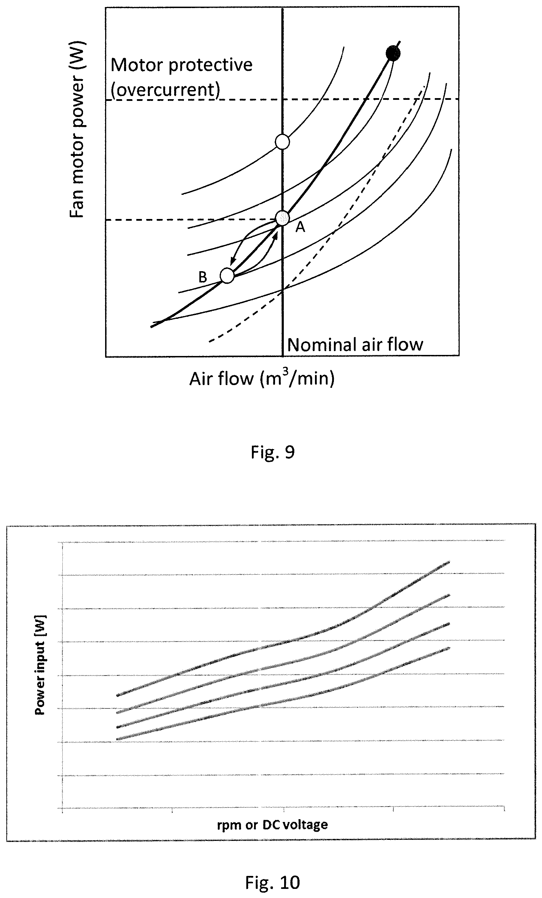

Figs. 8 and 9 show diagrams which illustrate the recalculation of the determined threshold value with a new starting point after for example the pressure drop of the ducting has been changed and/or the filter type has been changed and/or an additional filter has been added.

If another revolution speed/DC voltage setting has been chosen, then the system can perform a checking of the filter contamination based on the initial setting and automatically or manually reset the normal settings. In the Figs. 8 and 9, the Point A was the initial point on the initially chosen fan curve and Point B is the new point on the new chosen fan curve. In case a new revolution speed/DC voltage setting is chosen, the system calculates the new target based on the new starting point. If the filter is already partially contaminated then the system can calculate this based on the last remembered power input/current/resistance value of the previous settings compared to the previous threshold value.

First example not being part of the invention.

According to a first example not being part of the invention a method for determining a filter contamination state particularly for a ventilation system and/or an air conditioner is provided, wherein a revolution speed of a fan motor or a DC voltage for driving said fan motor is kept constant. The method according to the first example comprises the following steps:
- at the time of installing the filter contamination detection system, a curve of Fig. 3, the relation between ESP and air flow corresponding to a fixed rpm or a fixed DC voltage is shown on Fig. 3, is followed by the fans,

- the power input/current/resistance of the fan motor is measured, optionally a temperature influence is corrected, and an air flow rate and the ESP (external static pressure) can be determined based on the chosen curve of Fig. 4, the relation between power input and air flow corresponding to a fixed rpm of a fixed DC voltage is shown in Fig. 4,
   - a threshold value(s) is calculated by following the same curve in Fig. 3 or a same DC voltage curve and adding a pressure drop occurring at a maximum filter contamination to the current ESP,

   - determining a threshold value(s) of the power input/current/resistance of the fan motor for determining the need for cleaning or replacing the filter based on the above calculated threshold value(s),
      a) start of the system with a clean filter, the system has an ESP equal to a ducting pressure drop,
      b) fan motor power input/current with clean filter and ducting installed,
      c) over time the filter is getting contaminated, resulting in an increase of pressure drop over the air-filter,
         - the ESP of the system becomes equal to the ducting pressure drop + the additional filter pressure drop,
         - as the system is operated at a constant revolution speed or a constant DC voltage of the fan motor, air flow rate is decreasing for a higher ESP,
      d) as the filter gets contaminated, the fan motor power input/current/air flow rate is dropping to keep the revolution speed or DC voltage constant,
         - at predetermined time intervals or continuously the measured power input/current/resistance are compared to the set threshold value and optionally a filter cleaning status information is generated,
      e) when the fan motor power input/current/air flow rate has reached the set threshold value,
      f) a filter cleaning status information is generated and a filter cleaning signal or filter replacement signal is provided to an user,
      g) based on the provided signal the filter gets cleaned or replaced and pressure drop over the filter returns to lower/initial value,
      h) after the filter is cleaned or replaced normal operation continues until the set threshold value is reached again.

The steps a) to h) correspond to the points A to H highlighted in the diagram of Fig. 5.

Second example not being part of the invention.

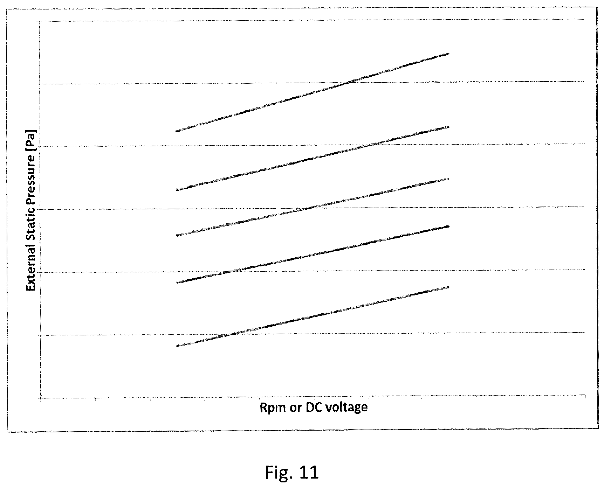

According to a second example not being part of the invention a method for determining a filter contamination state particularly for a ventilation system and/or an air conditioner is provided, wherein an air flow rate is kept constant. The method according to the second example comprises the following steps:
- the power input/current/resistance/revolution speed/DC voltage of the fan motor is measured, optionally a temperature influence is corrected, and an air flow rate can be determined based on the chosen curve of Fig. 11, the relation between power input and revolution speed or DC voltage corresponding to fixed air flow rate curves is shown in Fig. 10, the ESP can be determined based on Fig. 11, which shows the relation between the ESP and revolution speed or DC voltage corresponding to fixed air flow rate curves,
- the air flow rate is kept constant by changing the revolution speed or the DC voltage of the fan motor,
   - a threshold value(s) is calculated by following the same air flow rate in Fig. 11 and adding a pressure drop occurring at a maximum filter contamination to the current ESP,
- determining a threshold value(s) of the revolution speed/DC voltage/power input/current of the fan motor for determining the need for cleaning or replacing the filter based on the above calculated threshold value(s),
- it is checked if the determined threshold value for revolution speed is below the maximum/selected/predetermined revolution speed of the fan motor or that the determined threshold value for DC voltage is below the maximum/selected/predetermined DC voltage, if this is not the case then the method of embodiment 3 is used,
   a) start of the system with a clean filter, the system has an ESP equal to a ducting pressure drop,
   b) fan motor power input/current with clean air-filter and ducting installed,
   c) over time the filter is getting contaminated, resulting in an increase of pressure drop over the air-filter,
      - the ESP of the system becomes equal to the ducting pressure drop + the additional filter pressure drop,
      - at predetermined timer intervals or continuously the new ESP of the system is checked,
      - as the system is operated at a constant air flow rate, revolution speed or DC voltage of the fan motor is increased if needed,
   d) as the filter gets contaminated, ESP is increased, the fan motor power input/current/fan motor revolution speed DC voltage is increasing to keep the air flow rate constant,
      - at predetermined time intervals or continuously the measured revolution speed/DC voltage/power input/current of the fan motor is compared with the determined threshold value and optionally a filter cleaning status information is generated,
   e) when the fan motor revolution speed/DC voltage/power input/current has reached the set threshold value, a filter cleaning status information is generated and
   f) a filter cleaning signal or filter replacement signal is provided to an user,
   g) based on the provided signal the filter gets cleaned or replaced and pressure drop over the filter returns to lower/initial value,
   h) after the filter is cleaned or replaced normal operation continues until the set threshold value is reached again. The fan motor revolution speed or DC voltage is reduced to keep the same air flow rate and as such the power input/current is reduced.

The steps a) to h) correspond to the points A to H highlighted in the diagram of Fig. 6.

### Embodiment 3

According to a third currently preferred embodiment of the present disclosure a method for determining a filter contamination state particularly for a ventilation system and/or an air conditioner is provided, wherein an air flow rate is kept constant until a maximum/selected/predetermined revolution speed/DC voltage is reached. The method according to embodiment 3 comprises the following steps:
- the power input/current/resistance/revolution speed/DC voltage of the fan motor is measured, optionally a temperature influence is corrected, and an air flow rate can be determined based on the chosen curve of Fig. 10, the relation between power input and revolution speed or DC voltage corresponding to fixed air flow rate curves is shown in Fig. 10, the ESP can be determined based on Fig. 11, which shows the relation between the ESP and revolution speed or DC voltage corresponding to fixed air flow rate curves,
- the air flow rate is kept constant by changing the revolution speed or the DC voltage of the fan motor,
   - a threshold value(s) is calculated by following the same air flow rate in Fig. 11 and adding a pressure drop occurring at a maximum filter contamination to the current ESP,
- determining a threshold value(s) of the revolution speed/DC voltage/power input/current of the fan motor for determining the need for cleaning or replacing the filter based on the above calculated threshold value(s),
- however, if the determined threshold value for revolution speed is higher than the maximum/selected revolution speed of the fan motor or the determined threshold value for DC voltage is higher than the maximum/selected DC voltage,
- it is calculated how much the filter pressure drop increases if the maximum/selected revolution speed or the maximum/selected DC voltage is needed. The remaining part of the filter pressure drop is then used, to calculate the fan motor power input/current at the maximum/selected revolution speed or at the maximum/selected DC voltage to determine the threshold value (the fan motor power input/current can be compared to the determined threshold value at each moment to know the % of contamination),
   a) start of the system with a clean filter, the system has an ESP equal to a ducting pressure drop,
   b) fan motor power input/current/DC voltage with clean air-filter and ducting installed,
   c) over time the filter is getting contaminated, resulting in an increase of pressure drop over the air-filter,
      - the ESP of the system becomes equal to the ducting pressure drop + the additional filter pressure drop,
      - at predetermined/selected timer intervals the new ESP of the system is checked,
      - as the system is operated at a constant air flow rate, revolution speed or DC voltage of the fan motor is increased to overcome the additional pressure drop,
   d) the maximum revolution speed or the maximum DC voltage is not yet reached,
   e) as the contamination progresses, the revolution speed or the DC voltage of the fan motor increases, until it reaches the maximum revolution speed or the maximum DC voltage, from this moment both are kept constant,
   f) over time, the filter will get further contaminated, resulting in an increase of pressure drop over the filter. The ESP of the system is now equal to the ducting pressure drop + the additional filter pressure drop,
      - the system is operating at a constant maximum revolution speed or maximum DC voltage, so the air flow rate decreases for a higher ESP,
   g) when the fan motor power input/current has reached the set threshold value, a filter cleaning status information is generated and
   h) a filter cleaning signal or filter replacement signal is provided to an user,
   i) based on the provided signal the filter gets cleaned or replaced and pressure drop over the filter returns to lower/initial value,
      - the revolution speed or the DC voltage is recalculated based on the new initial pressure drop of the cleaned or new filter,
      - the threshold value(s) for revolution speed/DC voltage, power input/current of the fan motor) for the filter cleaning status information is kept the same,
   j) after the filter is cleaned or replaced normal operation continues until the set threshold value is reached again.

The steps a) to j) correspond to the points A to J highlighted in the diagram of Fig. 7.

## Claims

1. Filter contamination detection system (1) particularly for a ventilation system (2) and/or an air conditioner comprising:
a housing (20) accommodating:
a first air-filter (21);
a first fan (22) for inducing a first airflow through a first air passage (30), comprising an air inlet (31) and an air outlet (32), through the first air-filter (21); and
a first fan motor (23) that drives the first fan (22);
**characterized by**
a controller (40) configured to determine a filter contamination state of the first air-filter (21) on the basis of:
a) a fan motor power measurement and/or fan motor current measurement and/or fan motor resistance measurement and/or fan motor revolution speed measurement and/or DC voltage measurement during operation of the first fan motor (23) at a constant airflow rate until a maximum revolution speed or a predetermined or a selected revolution speed or a maximum DC voltage or a predetermined DC voltage or a selected DC voltage is reached and then keep a constant revolution speed or a constant DC voltage; or
b) an airflow rate measurement during operation of the first fan motor (23) at a constant DC voltage,
**characterized in that** the filter contamination detection system further comprises at least one temperature sensor (24) configured to measure a temperature of the first fan motor (23, 23a) or of the induced airflow, wherein the controller is configured to correct the fan motor power measurement(s) and/or the fan motor current measurement(s) and/or the fan motor resistance measurement(s) and/or the DC voltage measurement(s) for a temperature influence on the basis of the measured/calculated temperature(s).

2. Filter contamination detection system (1) according to claim 1, wherein
the housing (20) further accommodates:
a second air-filter (21a);
a second fan (22a) for inducing a second airflow through a second air passage (30a) comprising an air inlet (31a) and an air outlet (32a) through the second air-filter (21a); and
the filter contamination detection system (1) further comprises a second fan motor (23a) that drives the second fan (22a); wherein
the controller (40) is configured to determine the filter contamination states of the first air-filter (21) and the second air-filter (21a) independently from each other.

3. Filter contamination detection system (1) according to claim 2, wherein a heat exchanger (10) is configured to perform a heat transfer between the first air passage (30) and the second air passage (30a); the first air passage (30) is an air-supply passage that supplies outside air to a room and the second air passage (30a) is an air-exhaust passage that exhausts inside air to an outside.

4. Filter contamination detection system (1) according to any one of the preceding claims, further comprising at least one airflow determination device (26) for determining an airflow (V1, V2) of the first and/or second air passage (30, 30a).

5. Filter contamination detection system (1) according to any one of the preceding claims, further comprising:
at least one additional first fan (22) located in the first airflow and/or at least one additional second fan (22a) located in the second airflow; and/or
at least one additional first air-filter (21) located in the first airflow and/or at least one additional second air-filter (21a) located in the second airflow;
wherein the at least one additional first fan (22) is driven by the first fan motor (23) or by an additional first fan motor (23) and/or the at least one additional second fan (22a) is driven by the second fan motor (23a) or by an additional second fan motor (23a).

6. A method for determining a filter contamination state particularly for a ventilation system (2) and/or an air conditioner (3), using preferably the filter contamination detection system (1) according to any one of claims 1 to 5, comprising the steps:
a) operating a first fan motor (23) at a constant airflow rate until a maximum revolution speed or a predetermined revolution speed or a selected revolution speed or a maximum DC voltage or a predetermined DC voltage or a selected DC voltage is reached and then keep a constant revolution speed or a constant DC voltage;
b) performing a detection process of a fan motor power and/or a fan motor current and/or a fan motor resistance and/or fan motor revolution speed and/or DC voltage of the first fan motor (23), and correcting the detected values for temperature influence on base of measured/calculated temperatures;
c) determining a filter contamination state of a first air-filter (21) based on the corrected fan motor power and/or the corrected fan motor current and/or the detected fan motor resistance and/or the detected fan motor revolution speed and/or the detected DC voltage; and
d) generating a filter cleaning status information.

7. The method for determining a filter contamination state according to claim 6, wherein the step of determining a filter contamination state comprises: determining the filter contamination state of the first air-filter (21) by comparing the detected fan motor power and/or the detected fan motor current and/or the detected fan motor resistance and/or the detected fan motor revolution speed and/or the detected DC voltage to a data set of power input and/or current and/or resistance and/or revolution speed and/or DC voltage as a function of pressure, wherein the data set of the device is at a certain filter contamination state and a certain temperature.

8. A method for determining a filter contamination state particularly for a ventilation system (2) and/or an air conditioner, using preferably the filter contamination detection system (1) according to any one of claims 1 to 5, comprising the steps:
a) operating a first fan motor (23) at a constant DC voltage;
b) performing a detection process of an airflow rate, and correcting the detected values for temperature influence on base of measured/calculated temperatures;
c) determining a filter contamination state of a first air-filter (21) based on the corrected airflow rate; and
d) generating a filter cleaning status information.

9. The method for determining a filter contamination state according to claim 8, wherein the step of determining a filter contamination state comprises: determining the filter contamination state of the first air-filter (21) by comparing the detected airflow rate to a data set of airflow as a function of revolution speed or DC voltage, wherein the characteristic graphs are preferably measured at a certain filter contamination state and a certain temperature.

10. The method for determining a filter contamination state according to any one of claims 6 to 9, further comprising the steps:
a) operating a second or more fan motor (23a), particularly in a similar manner as the first fan motor (23);
b) determining a filter contamination state of a second or more air-filter (21a), particularly in a similar manner as in case of the first air-filter (21);
c) wherein, the filter contamination states of the first air-filter (21) and the second or more air-filter (21a) are determined independently from each other.

11. The method for determining a filter contamination state according to any one of claims 6 to 10, wherein a correction of the motor power measurement(s) and/or the fan motor current measurement(s) and/or the fan motor resistance measurement(s) and/or the DC voltage measurement(s) for a temperature influence is performed on the basis of a measured/calculated temperature(s) (T1, T2) of the first and/or second or more fan motor (23, 23a) and/or the induced airflow(s).

12. The method for determining a filter contamination state according to any one of claims 6 to 11, wherein by comparing the determined filter contamination state of the first air-filter (21) and/or the second or more air-filter (21a) with a predetermined filter contamination threshold value, which does not need to be the same for all filters, it is determined whether or not a cleaning of the first air-filter (21) and/or the second or more air-filter (21a) is necessary and accordingly the filter cleaning status information is generated.

13. The method for determining a filter contamination state according to any one of claims 6 to 12, wherein the generated filter cleaning status information is forwarded to a user or a handling system.

14. The method for determining a filter contamination state according to any one of claims 6 to 13, wherein the generated filter cleaning status information triggers a self-cleaning process of the first air-filter (21) and/or the second or more air-filter (21a) and/or contacts a cleaning service.

15. The method for determining a filter contamination state according to any one of claims 6 to 14, wherein the step of determining the filter contamination state of the first air-filter (21) and/or the second air-filter (21a) is performed either at certain time intervals and/or when starting the air conditioner and/or ventilation unit and/or when changing program parameters and/or continuously and/or based on a input signal.

16. The method for determining a filter contamination state according to any one of claims 6 to 15, wherein based on the determined filter contamination state(s) of the first and/or second or more air-filter (21, 21a) an approximate indication when the filter will have to be cleaned is provided to a user or an approximate indication of the amount of filter contamination is provided to a user.

17. The method for determining a filter contamination state according to any one of claims 11 to 16 which is dependent on claim 10, wherein the independent determination of the filter contamination states of the first and second or more air-filter (21, 21a) is performed based on different predetermined data fields.

18. The method for determining a filter contamination state according to any one of claims 6 to 17, wherein a correction of the motor power measurement(s) and/or the fan motor current measurement(s) and/or the fan motor resistance measurement(s) for a humidity influence is performed on the basis of a measured/calculate humidity(s) (H1, H2) in the first and/or second or more air passage(s) (30, 30a).

19. Use of the filter contamination detection system (1) according to any one of claims 1 to 5 for determining a filter contamination state of a first air-filter (21) and/or a second or more air-filter (21a) of a ventilation system (1) and/or an air conditioner, comprising the steps:
- operating a first fan motor (23) and/or a second or more fan motor (23a) at a constant revolution speed or a constant DC voltage for driving a first fan (22);
- performing a detection process of a fan motor power(s) and/or a fan motor current(s) and/or a fan motor resistance(s);
- determining a filter contamination state of a first air-filter (21) and/or a second or more air-filter (21a) based on the detected fan motor power(s) and/or a fan motor current(s) and/or a fan motor resistance(s), particularly by using the method for determining a filter contamination state according to any one of claims 6 to 18; and
- generating a filter cleaning status information.

## Patentansprüche

1. Filterkontaminationsdetektionssystem (1), insbesondere für ein Lüftungssystem (2) und/oder eine Klimaanlage, umfassend:
ein Gehäuse (20), aufnehmend:
einen ersten Luftfilter (21);
einen ersten Lüfter (22) zum Induzieren eines ersten Luftstroms durch einen ersten Luftkanal (30), umfassend einen Lufteinlass (31) und einen Luftauslass (32), durch den ersten Luftfilter (21); und
einen ersten Lüftermotor (23), der den ersten Lüfter (22) antreibt;
**dadurch gekennzeichnet, dass**
eine Steuereinheit (40), die ausgebildet ist, einen Filterkontaminationszustand des ersten Luftfilters (21) zu bestimmen, auf der Grundlage von:
a) einer Lüftermotorleistungsmessung und/oder Lüftermotorstrommessung und/oder Lüftermotorwiderstandsmessung und/oder Lüftermotordrehzahlmessung und/oder DC-Spannungsmessung während des Betriebs des ersten Lüftermotors (23) bei einem konstanten Luftvolumenstrom, bis eine maximale Drehzahl oder eine vorgegebene oder eine ausgewählte Drehzahl oder eine maximale DC-Spannung oder eine vorgegebene DC-Spannung oder eine ausgewählte DC-Spannung erreicht ist, und anschließend eine konstante Drehzahl oder eine konstante DC-Spannung beizubehalten; oder
b) einer Luftvolumenstrommessung während des Betriebs des ersten Lüftermotors (23) bei einer konstanten DC-Spannung,
**dadurch gekennzeichnet, dass** das Filterkontaminationsdetektionssystem weiter mindestens einen Temperatursensor (24) umfasst, der ausgebildet ist, eine Temperatur des ersten Lüftermotors (23, 23a) oder des induzierten Luftstroms zu messen, wobei die Steuereinheit ausgebildet ist, die Lüftermotorleistungsmessung(en) und/oder die Lüftermotorstrommessung(en) und/oder die Lüftermotorwiderstandsmessung(en) und/oder die DC-Spannungsmessung(en) hinsichtlich eines Temperatureinflusses auf der Grundlage von gemessenen/berechneten Temperatur(en) zu korrigieren.

2. Filterkontaminationsdetektionssystem (1) nach Anspruch 1, wobei
das Gehäuse (20) weiter aufnimmt:
einen zweiten Luftfilter (21a);
einen zweiten Lüfter (22a) zum Induzieren eines zweiten Luftstroms durch einen zweiten Luftkanal (30a), umfassend einen Lufteinlass (31a) und einen Luftauslass (32a) durch den zweiten Luftfilter (21a); und
das Filterkontaminationsdetektionssystem (1) weiter einen zweiten Lüftermotor (23a) umfasst, der den zweiten Lüfter (22a) antreibt; wobei
die Steuereinheit (40) ausgebildet ist, die Filterkontaminationszustände des ersten Luftfilters (21) und des zweiten Luftfilters (21a) unabhängig voneinander zu bestimmen.

3. Filterkontaminationsdetektionssystem (1) nach Anspruch 2, wobei ein Wärmetauscher (10) ausgebildet ist, eine Wärmeübertragung zwischen dem ersten Luftkanal (30) und dem zweiten Luftkanal (30a) durchzuführen; wobei der erste Luftkanal (30) ein Zuluftkanal ist, der Außenluft einem Raum zuführt, und der zweite Luftkanal (30a) ein Abluftkanal ist, der Innenluft nach außen abführt.

4. Filterkontaminationsdetektionssystem (1) nach einem der vorstehenden Ansprüche, das weiter mindestens eine Luftstrombestimmungsvorrichtung (26) zum Bestimmen eines Luftstroms (V1, V2) des ersten und/oder zweiten Luftkanals (30, 30a) umfasst.

5. Filterkontaminationsdetektionssystem (1) nach einem der vorstehenden Ansprüche, weiter umfassend:
mindestens einen zusätzlichen ersten Lüfter (22), der in dem ersten Luftstrom angeordnet ist, und/oder mindestens einen zusätzlichen zweiten Lüfter (22a), der in dem zweiten Luftstrom angeordnet ist; und/oder
mindestens einen zusätzlichen ersten Luftfilter (21), der in dem ersten Luftstrom angeordnet ist, und/oder mindestens einen zusätzlichen zweiten Luftfilter (21a), der in dem zweiten Luftstrom angeordnet ist;
wobei der mindestens eine zusätzliche erste Lüfter (22) von dem ersten Lüftermotor (23) oder von einem zusätzlichen ersten Lüftermotor (23) angetrieben wird und/oder der mindestens eine zusätzliche zweite Lüfter (22a) von dem zweiten Lüftermotor (23a) oder von einem zusätzlichen zweiten Lüftermotor (23a) angetrieben wird.

6. Verfahren zum Bestimmen eines Filterkontaminationszustands, insbesondere für ein Lüftungssystem (2) und/oder eine Klimaanlage (3), wobei bevorzugt das Filterkontaminationsdetektionssystem (1) nach einem der Ansprüche 1 bis 5 verwendet wird, umfassend die folgenden Schritte:
a) Betreiben eines ersten Lüftermotors (23) bei einem konstanten Luftvolumenstrom, bis eine maximale Drehzahl oder eine vorgegebene Drehzahl oder eine ausgewählte Drehzahl oder eine maximale DC-Spannung oder eine vorgegebene DC-Spannung oder eine ausgewählte DC-Spannung erreicht ist, und anschließendes Beibehalten einer konstanten Drehzahl oder einer konstanten DC-Spannung;
b) Durchführen eines Detektionsprozesses einer Lüftermotorleistung und/oder eines Lüftermotorstroms und/oder eines Lüftermotorwiderstands und/oder einer Lüftermotordrehzahl und/oder einer DC-Spannung des ersten Lüftermotors (23), und Korrigieren der detektierten Werte hinsichtlich eines Temperatureinflusses auf der Grundlage von gemessenen/berechneten Temperaturen;
c) Bestimmen eines Filterkontaminationszustands eines ersten Luftfilters (21) basierend auf der korrigierten Lüftermotorleistung und/oder dem korrigierten Lüftermotorstrom und/oder dem detektierten Lüftermotorwiderstand und/oder der detektierten Lüftermotordrehzahl und/oder der detektierten DC-Spannung; und
d) Erzeugen einer Filterreinigungsstatusinformation.

7. Verfahren zum Bestimmen eines Filterkontaminationszustands nach Anspruch 6, wobei der Schritt des Bestimmens eines Filterkontaminationszustands umfasst: Bestimmen des Filterkontaminationszustands des ersten Luftfilters (21) durch Vergleichen der detektierten Lüftermotorleistung und/oder des detektierten Lüftermotorstroms und/oder des detektierten Lüftermotorwiderstands und/oder der detektierten Lüftermotordrehzahl und/oder der detektierten DC-Spannung mit einem Datensatz von Leistungsaufnahme und/oder Strom und/oder Widerstand und/oder Drehzahl und/oder DC-Spannung als Funktion des Drucks, wobei der Datensatz der Vorrichtung bei einem bestimmten Filterkontaminationszustand und einer bestimmten Temperatur vorliegt.

8. Verfahren zum Bestimmen eines Filterkontaminationszustands, insbesondere für ein Lüftungssystem (2) und/oder eine Klimaanlage, wobei bevorzugt das Filterkontaminationsdetektionssystem (1) nach einem der Ansprüche 1 bis 5 verwendet wird, umfassend die folgenden Schritte:
a) Betreiben eines ersten Lüftermotors (23) bei einer konstanten DC-Spannung;
b) Durchführen eines Detektionsprozesses eines Luftvolumenstroms, und Korrigieren der detektierten Werte hinsichtlich eines Temperatureinflusses auf der Grundlage von gemessenen/berechneten Temperaturen;
c) Bestimmen eines Filterkontaminationszustands eines ersten Luftfilters (21) basierend auf dem korrigierten Luftvolumenstrom; und
d) Erzeugen einer Filterreinigungsstatusinformation.

9. Verfahren zum Bestimmen eines Filterkontaminationszustands nach Anspruch 8, wobei der Schritt des Bestimmens eines Filterkontaminationszustands umfasst: Bestimmen des Filterkontaminationszustands des ersten Luftfilters (21) durch Vergleichen des detektierten Luftvolumenstroms mit einem Datensatz des Luftstroms als Funktion der Drehzahl oder der DC-Spannung, wobei die Kennlinien bevorzugt bei einem bestimmten Filterkontaminationszustand und einer bestimmten Temperatur gemessen werden.

10. Verfahren zum Bestimmen eines Filterkontaminationszustands nach einem der Ansprüche 6 bis 9, das weiter die Schritte umfasst:
a) Betreiben eines zweiten oder weiterer Lüftermotoren (23a), insbesondere in ähnlicher Weise wie der erste Lüftermotor (23);
b) Bestimmen eines Filterkontaminationszustands eines zweiten oder weiterer Luftfilter (21a), insbesondere in ähnlicher Weise wie im Falle des ersten Luftfilters (21);
c) wobei die Filterkontaminationszustände des ersten Luftfilters (21) und des zweiten oder weiterer Luftfilter (21a) unabhängig voneinander bestimmt werden.

11. Verfahren zum Bestimmen eines Filterkontaminationszustands nach einem der Ansprüche 6 bis 10, wobei eine Korrektur der Motorleistungsmessung(en) und/oder der Lüftermotorstrommessung(en) und/oder der Lüftermotorwiderstandsmessung(en) und/oder der DC-Spannungsmessung(en) hinsichtlich eines Temperatureinflusses auf der Grundlage von gemessener/berechneter Temperatur(en) (T1, T2) des ersten und/oder zweiten oder weiterer Lüftermotoren (23, 23a) und/oder des induzierten Luftstrom(s) durchgeführt wird.

12. Verfahren zum Bestimmen eines Filterkontaminationszustands nach einem der Ansprüche 6 bis 11, wobei, durch Vergleichen des bestimmten Filterkontaminationszustands des ersten Luftfilters (21) und/oder des zweiten oder weiterer Luftfilter (21a) mit einem vorgegebenen Filterkontaminationsschwellenwert, der nicht für alle Filter gleich sein muss, bestimmt wird, ob eine Reinigung des ersten Luftfilters (21) und/oder des zweiten oder weiterer Luftfilter (21a) notwendig ist oder nicht, und entsprechend die Filterreinigungsstatusinformation erzeugt wird.

13. Verfahren zum Bestimmen eines Filterkontaminationszustands nach einem der Ansprüche 6 bis 12, wobei die erzeugte Filterreinigungsstatusinformation an einen Benutzer oder ein Handhabungssystem weitergeleitet wird.

14. Verfahren zum Bestimmen eines Filterkontaminationszustands nach einem der Ansprüche 6 bis 13, wobei die erzeugte Filterreinigungsstatusinformation einen Selbstreinigungsprozess des ersten Luftfilters (21) und/oder des zweiten oder weiterer Luftfilter (21a) auslöst und/oder einen Reinigungsdienst kontaktiert.

15. Verfahren zum Bestimmen eines Filterkontaminationszustands nach einem der Ansprüche 6 bis 14, wobei der Schritt des Bestimmens des Filterkontaminationszustands des ersten Luftfilters (21) und/oder des zweiten Luftfilters (21a) entweder in bestimmten Zeitintervallen und/oder beim Starten der Klimaanlage und/oder des Lüftungsgeräts und/oder beim Ändern von Programmparametern und/oder kontinuierlich und/oder basierend auf einem Eingangssignal durchgeführt wird.

16. Verfahren zum Bestimmen eines Filterkontaminationszustands nach einem der Ansprüche 6 bis 15, wobei, basierend auf dem/den bestimmten Filterkontaminationszustand/-zuständen des ersten und/oder zweiten oder weiterer Luftfilter (21, 21a), einem Benutzer eine ungefähre Angabe, wann der Filter gereinigt werden muss, bereitgestellt wird oder einem Benutzer eine ungefähre Angabe der Menge der Filterkontamination bereitgestellt wird.

17. Verfahren zum Bestimmen eines Filterkontaminationszustands nach einem der Ansprüche 11 bis 16, der von Anspruch 10 abhängig ist, wobei die unabhängige Bestimmung der Filterkontaminationszustände des ersten und zweiten oder weiterer Luftfilter (21, 21a) basierend auf unterschiedlichen vorgegebenen Datenfeldern durchgeführt wird.

18. Verfahren zum Bestimmen eines Filterkontaminationszustands nach einem der Ansprüche 6 bis 17, wobei eine Korrektur der Motorleistungsmessung(en) und/oder der Lüftermotorstrommessung(en) und/oder der Lüftermotorwiderstandsmessung(en) hinsichtlich eines Feuchtigkeitseinflusses auf der Grundlage von gemessener/berechneter Luftfeuchtigkeit(en) (H1, H2) in dem ersten und/oder zweiten oder weiteren Luftkanal/- kanälen (30, 30a) durchgeführt wird.

19. Verwendung des Filterkontaminationsdetektionssystems (1) nach einem der Ansprüche 1 bis 5 zum Bestimmen eines Filterkontaminationszustands eines ersten Luftfilters (21) und/oder eines zweiten oder weiterer Luftfilter (21a) eines Lüftungssystems (1) und/oder einer Klimaanlage, umfassend die Schritte:
- Betreiben eines ersten Lüftermotors (23) und/oder eines zweiten oder weiterer Lüftermotoren (23a) bei einer konstanten Drehzahl oder einer konstanten DC-Spannung zum Antreiben eines ersten Lüfters (22);
- Durchführen eines Detektionsprozesses einer Lüftermotorleistung(en) und/oder eines Lüftermotorstrom(s) und/oder eines Lüftermotorwiderstand(s);
- Bestimmen eines Filterkontaminationszustands eines ersten Luftfilters (21) und/oder eines zweiten oder weiterer Luftfilter (21a) basierend auf der detektierten Lüftermotorleistung(en) und/oder einem Lüftermotorstrom(s) und/oder einem Lüftermotorwiderstand(s), insbesondere unter Verwendung des Verfahrens zum Bestimmen eines Filterkontaminationszustands nach einem der Ansprüche 6 bis 18; und
- Erzeugen einer Filterreinigungsstatusinformation.

## Revendications

1. Système (1) de détection de contamination de filtre en particulier pour un système de ventilation (2) et/ou un climatiseur comprenant :
un boîtier (20) abritant :
un premier filtre à air (21) ;
un premier ventilateur (22) pour induire un premier flux d'air à travers un premier passage d'air (30), comprenant une entrée d'air (31) et une sortie d'air (32), à travers le premier filtre à air (21) ; et
un premier moteur (23) de ventilateur qui entraîne le premier ventilateur (22) ;
**caractérisé par**
un dispositif de commande (40) configuré pour déterminer un état de contamination de filtre du premier filtre à air (21) sur la base de :
a) une mesure de puissance de moteur de ventilateur et/ou une mesure de courant du moteur de ventilateur et/ou une mesure de résistance de moteur de ventilateur et/ou une mesure de vitesse de rotation de moteur de ventilateur et/ou une mesure de tension CC pendant le fonctionnement du premier moteur (23) de ventilateur à un débit d'air constant jusqu'à ce qu'une vitesse de rotation maximale ou une vitesse de rotation prédéterminée ou une vitesse de rotation sélectionnée ou une tension CC maximale ou une tension CC prédéterminée ou une tension CC sélectionnée soit atteinte puis maintenir une vitesse de rotation constante ou une tension CC constante ; ou
b) une mesure de débit d'air pendant le fonctionnement du premier moteur (23) de ventilateur à une tension CC constante,
**caractérisé en ce que** le système de détection de contamination de filtre comprend en outre au moins un capteur (24) de température configuré pour mesurer une température du premier moteur (23, 23a) de ventilateur ou du flux d'air induit,
dans lequel le dispositif de commande est configuré pour corriger la(les) mesure(s) de puissance de moteur de ventilateur et/ou la(les) mesure(s) de courant de moteur de ventilateur et/ou la(les) mesure(s) de résistance de moteur de ventilateur et/ou la(les) mesure(s) de tension CC pour une influence de température sur la base de la(des) température(s) mesurée(s)/calculée(s).

2. Système (1) de détection de contamination de filtre selon la revendication 1, dans lequel
le boîtier (20) abrite en outre :
un second filtre à air (21a) ;
un second ventilateur (22a) pour induire un second flux d'air à travers un second passage d'air (30a) comprenant une entrée d'air (31a) et une sortie d'air (32a) à travers le second filtre à air (21a) ; et
le système (1) de détection de contamination de filtre comprend en outre un second moteur (23a) de ventilateur qui entraîne le second ventilateur (22a) ; dans lequel
le dispositif de commande (40) est configuré pour déterminer les états de contamination de filtre du premier filtre à air (21) et du second filtre à air (21a) indépendamment l'un de l'autre.

3. Système (1) de détection de contamination de filtre selon la revendication 2, dans lequel un échangeur de chaleur (10) est configuré pour mettre en œuvre un transfert de chaleur entre le premier passage d'air (30) et le second passage d'air (30a) ; le premier passage d'air (30) est un passage d'apport d'air qui apporte de l'air extérieur à une pièce et le second passage d'air (30a) est un passage d'évacuation d'air qui évacue l'air intérieur vers un extérieur.

4. Système (1) de détection de contamination de filtre selon l'une quelconque des revendications précédentes, comprenant en outre au moins un dispositif de détermination (26) de flux d'air pour déterminer un flux d'air (V1, V2) du premier et/ou du second passage d'air (30, 30a).

5. Système (1) de détection de contamination de filtre selon l'une quelconque des revendications précédentes, comprenant en outre :
au moins un premier ventilateur supplémentaire (22) situé dans le premier flux d'air et/ou au moins un second ventilateur supplémentaire (22a) situé dans le second flux d'air ; et/ou
au moins un premier filtre à air supplémentaire (21) situé dans le premier flux d'air et/ou au moins un second filtre à air supplémentaire (21a) situé dans le second flux d'air ;
dans lequel le au moins un premier ventilateur supplémentaire (22) est entraîné par le premier moteur (23) de ventilateur ou par un premier moteur supplémentaire (23) de ventilateur et/ou le au moins un second ventilateur supplémentaire (22a) est entraîné par le second moteur (23a) de ventilateur ou par un second moteur supplémentaire (23a) de ventilateur.

6. Procédé pour déterminer un état de contamination de filtre en particulier pour un système de ventilation (2) et/ou un climatiseur (3), en utilisant préférablement le système (1) de détection de contamination de filtre selon l'une quelconque des revendications 1 à 5, comprenant les étapes suivantes :
a) l'actionnement d'un premier moteur (23) de ventilateur à un débit d'air constant jusqu'à ce qu'une vitesse de rotation maximale ou une vitesse de rotation prédéterminée ou une vitesse de rotation sélectionnée ou une tension CC maximale ou une tension CC prédéterminée ou une tension CC sélectionnée soit atteinte puis maintenir une vitesse de rotation constante ou une tension CC constante ;
b) la mise en œuvre d'un processus de détection d'une puissance de moteur de ventilateur et/ou d'un courant de moteur de ventilateur et/ou d'une résistance de moteur de ventilateur et/ou d'une vitesse de rotation de moteur de ventilateur et/ou d'une tension CC du premier moteur (23) de ventilateur, et la correction des valeurs détectées pour une influence de température sur la base de températures mesurées/calculées ;
c) la détermination d'un état de contamination de filtre d'un premier filtre à air (21) sur la base de la puissance de moteur de ventilateur corrigée et/ou du courant de moteur de ventilateur corrigé et/ou de la résistance de moteur de ventilateur détectée et/ou de la vitesse de rotation de moteur de ventilateur détectée et/ou de la tension CC détectée ; et
d) la génération d'une information d'état de nettoyage de filtre.

7. Procédé pour déterminer un état de contamination de filtre selon la revendication 6, dans lequel l'étape de détermination d'un état de contamination de filtre comprend :
la détermination de l'état de contamination de filtre du premier filtre à air (21) en comparant la puissance de moteur de ventilateur détectée et/ou le courant de moteur de ventilateur détecté et/ou la résistance du moteur de ventilateur détectée et/ou la vitesse de rotation de moteur de ventilateur détectée et/ou la tension CC détectée à un ensemble de données de puissance d'entrée et/ou de courant et/ou de résistance et/ou de vitesse de rotation et/ou de tension CC en fonction de la pression,
dans lequel l'ensemble de données du dispositif est à un certain état de contamination de filtre et à une certaine température.

8. Procédé pour déterminer un état de contamination de filtre en particulier pour un système de ventilation (2) et/ou un climatiseur, en utilisant préférablement le système (1) de détection de contamination de filtre selon l'une quelconque des revendications 1 à 5, comprenant les étapes suivantes :
a) l'actionnement d'un premier moteur (23) de ventilateur à une tension CC constante ;
b) la mise en œuvre d'un processus de détection d'un débit d'air, et la correction des valeurs détectées pour une influence de température sur la base de températures mesurées/calculées ;
c) la détermination d'un état de contamination de filtre d'un premier filtre à air (21) sur la base du débit d'air corrigé ; et
d) la génération d'une information d'état de nettoyage de filtre.

9. Procédé pour déterminer un état de contamination de filtre selon la revendication 8, dans lequel l'étape de détermination d'un état de contamination de filtre comprend :
la détermination de l'état de contamination de filtre du premier filtre à air (21) en comparant le débit d'air détecté à un ensemble de données de débit d'air en fonction de la vitesse de rotation ou de la tension CC, dans lequel les graphiques caractéristiques sont préférablement mesurés à un certain état de contamination de filtre et à une certaine température.

10. Procédé pour déterminer un état de contamination de filtre selon l'une quelconque des revendications 6 à 9, comprenant en outre les étapes :
a) d'actionnement d'un second moteur (23a) de ventilateur ou plus, en particulier d'une manière similaire au premier moteur (23) de ventilateur ;
b) la détermination d'un état de contamination de filtre d'un second filtre à air (21a) ou plus, en particulier d'une manière similaire au cas du premier filtre à air (21) ;
c) dans lequel les états de contamination de filtre du premier filtre à air (21) et du second filtre à air (21a) ou plus sont déterminés indépendamment l'un de l'autre.

11. Procédé pour déterminer un état de contamination de filtre selon l'une quelconque des revendications 6 à 10, dans lequel
une correction de la(des) mesure(s) de puissance de moteur et/ou de la(des) mesure(s) de courant de moteur de ventilateur et/ou de la(des) mesure(s) de résistance de moteur de ventilateur et/ou de la(des) mesure(s) de tension CC pour une influence de température est mise en œuvre sur la base d'une(de) température(s) mesurée(s)/calculée(s) (T1, T2) du premier et/ou du second moteur (23, 23a) de ventilateur ou plus et/ou du(des) débit(s) d'air induit(s).

12. Procédé pour déterminer un état de contamination de filtre selon l'une quelconque des revendications 6 à 11,
dans lequel en comparant l'état de contamination de filtre déterminé du premier filtre à air (21) et/ou du second filtre à air (21a) ou plus avec une valeur seuil de contamination de filtre prédéterminée, qui n'a pas besoin d'être la même pour tous les filtres, on détermine si un nettoyage du premier filtre à air (21) et/ou du second filtre à air (21a) ou plus est nécessaire ou non et en conséquence l'information d'état de nettoyage de filtre est générée.

13. Procédé pour déterminer un état de contamination de filtre selon l'une quelconque des revendications 6 à 12, dans lequel l'information d'état de nettoyage de filtre générée est transmise à un utilisateur ou à un système de gestion.

14. Procédé pour déterminer un état de contamination de filtre selon l'une quelconque des revendications 6 à 13, dans lequel l'information d'état de nettoyage de filtre générée déclenche un processus d'autonettoyage du premier filtre à air (21) et/ou du second filtre à air (21a) ou plus et/ou contacte un service de nettoyage.

15. Procédé pour déterminer un état de contamination de filtre selon l'une quelconque des revendications 6 à 14, dans lequel l'étape de détermination de l'état de contamination de filtre du premier filtre à air (21) et/ou du second filtre à air (21a) est mise en œuvre soit à certains intervalles de temps et/ou lors du démarrage du climatiseur et/ou de l'unité de ventilation et/ou lors de la modification de paramètres de programme et/ou de manière continue et/ou sur la base d'un signal d'entrée.

16. Procédé pour déterminer un état de contamination de filtre selon l'une quelconque des revendications 6 à 15, dans lequel sur la base du(des) état(s) de contamination de filtre déterminé(s) du premier et/ou du second filtre à air (21, 21a) ou plus une indication approximative du moment où le filtre devra être nettoyé est fournie à un utilisateur ou une indication approximative de la quantité de contamination de filtre est fournie à un utilisateur.

17. Procédé pour déterminer un état de contamination de filtre selon l'une quelconque des revendications 11 à 16 qui dépend de la revendication 10, dans lequel la détermination indépendante des états de contamination de filtre du premier et du second filtre à air (21, 21a) ou plus est mise en œuvre sur la base de différents champs de données prédéfinis.

18. Procédé pour déterminer un état de contamination de filtre selon l'une quelconque des revendications 6 à 17, dans lequel une correction de la(des) mesure(s) de puissance de moteur et/ou de la(des) mesure(s) de courant de moteur de ventilateur et/ou de la(des) mesure(s) de résistance de moteur de ventilateur pour une influence d'humidité est mise en œuvre sur la base d'une(d') humidité(s) mesurée(s)/calculée(s) (H1, H2) dans le(les) premier et/ou second passage(s) d'air (30, 30a) ou plus.

19. Utilisation du système (1) de détection de contamination de filtre selon l'une quelconque des revendications 1 à 5 pour déterminer un état de contamination de filtre d'un premier filtre à air (21) et/ou d'un second filtre à air (21a) ou plus d'un système de ventilation (1) et/ou d'un climatiseur, comprenant les étapes :
- d'actionnement d'un premier moteur (23) de ventilateur et/ou d'un second moteur (23a) de ventilateur ou plus à une vitesse de rotation constante ou une tension CC constante pour entraîner un premier ventilateur (22) ;
- la mise en œuvre d'un processus de détection d'une (de) puissance(s) de moteur de ventilateur et/ou d'un (de) courant(s) de moteur de ventilateur et/ou d'une (de) résistance(s) de moteur de ventilateur ;
- la détermination d'un état de contamination de filtre d'un premier filtre à air (21) et/ou d'un second filtre à air (21a) ou plus sur la base de la(des) puissance(s) de moteur de ventilateur détectée(s) et/ou du(des) courant(s) de moteur de ventilateur détecté(s) et/ou de la(des) résistance(s) de moteur de ventilateur détectée(s), en particulier en utilisant le procédé pour déterminer un état de contamination de filtre selon l'une quelconque des revendications 6 à 18 ; et
- la génération d'une information d'état de nettoyage de filtre.
